# EUROPEAN PATENT APPLICATION

(11) **EP 4 746 184 A1**
(43) Date of publication of application: **20.05.2026**
(21) Application number: 24857768.6
(22) Date of filing: 09.04.2024
(51) Int. Cl.: H01M 50/543

(54) **BATTERY CELL, BATTERY, AND ELECTRICAL DEVICE**

(30) Priority: 31.08.2023 CN 202311118924
(71) Applicant: Contemporary Amperex Technology Co., Limited, Ningde, Fujian 352100 (CN)
(72) Inventor: WU, Kai, Ningde, Fujian 352100 (CN); LI, Meng, Ningde, Fujian 352100 (CN); WANG, Zejiang, Ningde, Fujian 352100 (CN)
(74) Representative: Ziebig Hengelhaupt Intellectual Property Attorneys Patentanwaltskanzlei PartGmbB
(86) International application number: PCT/CN2024/086723
(87) International publication number: WO 2025/044218

(57) **Abstract**

This application relates to the field of battery technology and provides a battery cell (10), a battery (1), and an electric apparatus. The battery cell (10) includes a housing (11), an electrode assembly (15), and an electrode terminal (12). The housing (11) includes a first wall (113). The electrode assembly (15) is accommodated within the housing (11). The electrode terminal (12) includes a terminal body (121) and a reinforcing member (122). The terminal body (121) is disposed on the first wall (113) and electrically connected to the electrode assembly (15). The reinforcing member (122) is connected to an end of the terminal body (121) in a thickness direction of the terminal body (121). Based on the above structure, the electrode terminal (12) can achieve higher structural strength, thereby reducing the risk of cracking of the electrode terminal (12) due to stress concentration or inadequate structural strength, and extending the service life of the electrode terminal (12) and the battery cell (10).

## Description

### CROSS-REFERENCE TO RELATED APPLICATIONS

This application claims priority to Chinese Patent Application No. 202311118924.7, filed on August 31, 2023 and entitled "BATTERY CELL, BATTERY, AND ELECTRIC APPARATUS", which is incorporated herein by reference in its entirety.

### TECHNICAL FIELD

Embodiments of this application relate to the field of battery technology, and in particular, to a battery cell, a battery, and an electric apparatus.

### BACKGROUND

In some cases, a battery cell includes an end cap and an electrode terminal mounted on the end cap. During use of the battery cell, the electrode terminal continuously withstands deformation-induced internal stress. However, the structural strength of electrode terminals is generally inadequate.

### SUMMARY

Embodiments of this application provide a battery cell, a battery, and an electric apparatus, aiming to address the issue of generally inadequate structural strength of electrode terminals.

To achieve the above objective, the technical solutions adopted by the embodiments of this application are described as follows.

According to a first aspect, a battery cell is provided, including:
a housing including a first wall;
an electrode assembly accommodated within the housing; and
an electrode terminal including a terminal body and a reinforcing member, where the terminal body is disposed on the first wall and electrically connected to the electrode assembly, and the reinforcing member is connected to an end of the terminal body in a thickness direction of the terminal body.

The battery cell provided by the embodiments of this application allows at least one electrode terminal to include a terminal body and a reinforcing member. Based on this, the electrode terminal may be electrically connected to the electrode assembly through the terminal body mounted on the first wall to output or input electrical energy. The electrode terminal may be further connected to an end of the terminal body in the thickness direction of the terminal body through the reinforcing member, reinforcing the terminal body, thereby ensuring and improving the overall structural strength of both the terminal body and the reinforcing member. Based on this, the electrode terminal can achieve higher structural strength through a composite structure of the terminal body and the reinforcing member, ensuring that the electrode terminal can meet the processing and assembly requirements, and ensuring that the electrode terminal can withstand deformation-induced internal stress during use of the battery cell, thereby reducing the risk of cracking of the electrode terminal due to stress concentration or inadequate structural strength, and ensuring and extending the service life of the electrode terminal and the battery cell. Furthermore, based on the achieved higher structural strength, the composite structure of the terminal body and the reinforcing member can reduce the increase in the thickness of the electrode terminal, thereby reducing the negative impact on the volumetric energy density of the battery cell.

In some embodiments, the reinforcing member is connected to an end of the terminal body close to the electrode assembly.

With the above solution used, the reinforcing member is connected to the end of the terminal body close to the electrode assembly, so that the reinforcing member primarily reinforces a portion of the terminal body located inside the housing. Based on this, the overall structural strength of the portion of the electrode terminal inside the housing can be ensured and improved, allowing the portion of the electrode terminal inside the housing to have higher overall structural strength. This allows the electrode terminal to be processed to reliably cooperate with the first wall, establish a reliable electrical connection with the electrode assembly, withstand deformation-induced internal stress during use of the battery cell, and be not prone to cracking due to stress concentration or inadequate structural strength. In addition, based on this, the reduction of the increase in the thickness of the portion of the electrode terminal inside the housing is further facilitated, thereby limiting the space occupied by the electrode terminal within the housing and reducing the negative impact on the volumetric energy density of the battery cell.

In some embodiments, the reinforcing member is connected to an end face of the terminal body close to the electrode assembly.

With the above solution used, the reinforcing member is connected to the end face of the terminal body close to the electrode assembly, so that the connection convenience and connection reliability between the reinforcing member and the terminal body can be improved. In addition, this can ensure an arrangement area of the reinforcing member on the end face of the terminal body close to the electrode assembly, thereby ensuring that the reinforcing member can provide large-area, more balanced, and more effective reinforcement to the portion of the terminal body inside the housing. Therefore, this is conducive to ensuring and improving the overall structural strength of the portion of the electrode terminal inside the housing, and uniformly reducing the increase in the thickness of the portion of the electrode terminal inside the housing, thereby uniformly constraining the space occupied by the electrode terminal within the housing, and reducing the negative impact on the volumetric energy density of the battery cell.

In some embodiments, the reinforcing member is provided with a through hole; the through hole runs through the reinforcing member along a thickness direction of the reinforcing member; and at least a portion of the terminal body is exposed via the through hole and electrically connected to the electrode assembly.

With the above solution used, the provision of the through hole in the reinforcing member allows at least a portion of the terminal body to be exposed via the through hole and electrically connected to the electrode assembly. Based on this, the establishment of an electrical connection between the terminal body and the electrode assembly in a manner of bypassing the reinforcing member can be facilitated, thereby reducing the impact of the reinforcing member on the current-carrying capacity between the terminal body and the electrode assembly, and helping to ensure and improve the current-carrying capacity between the terminal body and the electrode assembly.

In some embodiments, the through hole is located at a middle portion of the reinforcing member.

With the above solution used, when the reinforcing member is connected to the end face of the terminal body close to the electrode assembly, the provision of the through hole at the middle portion of the reinforcing member allows a middle region of the end face of the terminal body close to the electrode assembly to be exposed via the through hole and electrically connected to the electrode assembly. Based on this, the establishment of an electrical connection between the middle region of the end face of the terminal body and the electrode assembly in a manner of bypassing the reinforcing member can be facilitated, thereby ensuring and improving the connection convenience and connection reliability between the terminal body and the electrode assembly, and optimizing a current path and current-carrying capacity between the terminal body and the electrode assembly.

In some embodiments, the first wall is provided with a mounting hole running therethrough, and the terminal body is mounted in the mounting hole; and
along the thickness direction of the reinforcing member, a projection of the through hole is located within a projection of the mounting hole.

With the above solution used, the projection of the through hole along the thickness direction of the reinforcing member falling within the projection of the mounting hole along the thickness direction of the reinforcing member allows an arrangement range of the through hole to be not larger than an arrangement range of the mounting hole. Based on this, it can be ensured that the through hole is not provided in a region of the reinforcing member corresponding to a joint between the terminal body and the mounting hole, allowing the reinforcing member to reliably reinforce the region of the terminal body at the joint with the mounting hole, thereby ensuring and improving the overall structural strength of the electrode terminal at the joint with the mounting hole, reducing the risk of cracking in the region of the electrode terminal at the joint with the mounting hole due to stress concentration or inadequate structural strength, and ensuring and extending the service life of the battery cell.

In some embodiments, an end of the terminal body away from the electrode assembly is provided with a groove; and
along the thickness direction of the reinforcing member, a projection of the groove is located within the projection of the through hole.

With the above solution used, the end of the terminal body away from the electrode assembly is provided with the groove, so that an operational space is formed by the groove, facilitating a connection operation at a bottom of the groove from the outside of the terminal body, thereby facilitating the establishment of a convenient and reliable electrical connection between the bottom of the groove and the electrode assembly. In addition, the groove can reduce the material costs of the terminal body and the electrode terminal as well as the weights of the terminal body and the electrode terminal, thereby reducing the cost of the battery cell and increasing the weight energy density of the battery cell.

With the above solution used, the projection of the groove along the thickness direction of the reinforcing member falling within the projection of the through hole along the thickness direction of the reinforcing member allows the arrangement range of the through hole to be not smaller than an arrangement range of the groove. Based on this, it can be ensured that the through hole can avoid a bottom portion of the groove and can avoid a primary portion of the terminal body electrically connected to the electrode assembly, thereby ensuring and improving the connection convenience between the terminal body and the electrode assembly, particularly during welding to establish the electrical connection between the terminal body and the electrode assembly, reducing the risk of portions of the reinforcing member mixing into a weld seam and forming impurities, which otherwise affect welding quality and current-carrying capacity.

In some embodiments, the battery cell includes an adapter; the adapter is configured to electrically connect the electrode assembly to the terminal body; and the adapter is connected to a portion of the terminal body exposed via the through hole.

With the above solution used, the adapter can be electrically connected to the electrode assembly and electrically connected to the portion of the terminal body exposed via the through hole, thereby establishing a stable and reliable electrical connection between the electrode assembly and the terminal body. Based on this, the adapter can provide current collection and current flow between the electrode assembly and the terminal body. In addition, since the adapter is directly connected to the portion of the terminal body exposed via the through hole in a manner of bypassing the reinforcing member, the impact of the reinforcing member on the current-carrying capacity between the terminal body and the adapter can be effectively reduced, thereby helping to ensure and improve the current-carrying capacity between the terminal body and the electrode assembly.

In some embodiments, the adapter includes an adapter body and a first protrusion disposed on the adapter body, and the first protrusion passes through the through hole and is connected to the terminal body.

With the above solution used, the adapter can be conveniently and reliably electrically connected to a tab of the electrode assembly through the adapter body, ensuring and improving the connection convenience, connection reliability, and current-carrying capacity between the adapter and the electrode assembly. The adapter can also pass through the through hole with precise alignment through the first protrusion disposed on the adapter body so as to be reliably electrically connected to the portion of the terminal body exposed via the through hole in a manner of bypassing the reinforcing member, thereby ensuring and improving the connection convenience, connection reliability, and current-carrying capacity between the adapter and the terminal body.

Furthermore, the adapter can combine thicknesses of the first protrusion and a portion of the adapter body corresponding to the first protrusion, ensuring that the adapter has a sufficient thickness for connection with the terminal body, thereby ensuring a reliable and effective connection between the adapter and the terminal body, ensuring and increasing an effective weld penetration depth between the adapter and the terminal body, and reducing the risk of issues such as scorching of a separator and incomplete welding.

In addition, on the basis that the overall thickness of the first protrusion and the portion of the adapter body corresponding to the first protrusion can meet the above requirements, the adapter can reduce the thickness of the adapter body accordingly, and at least a portion of the first protrusion passes through the through hole, thereby allowing at least a portion of the first protrusion to share space with the reinforcing member along the thickness direction of the reinforcing member. Based on this, an additional space occupied by the adapter on a side of the reinforcing member away from the terminal body can be effectively reduced, effectively reducing the overall space occupied by the adapter and the electrode terminal within the housing, thereby facilitating an increase in the volumetric energy density of the battery cell.

In some embodiments, the portion of the terminal body exposed via the through hole is provided with a second protrusion, and the second protrusion passes through the through hole and is connected to the adapter.

With the above solution used, the terminal body can pass through the through hole with precise alignment through the second protrusion so as to be reliably electrically connected to a portion of the adapter corresponding to the through hole in a manner of bypassing the reinforcing member, thereby ensuring and improving the connection convenience, connection reliability, and current-carrying capacity between the terminal body and the adapter.

In addition, the provision of the second protrusion can ensure a sufficient connection thickness between the terminal body and the adapter in a region corresponding to the second protrusion, thereby ensuring a reliable and effective connection between the terminal body and the adapter, ensuring and increasing the effective weld penetration depth between the terminal body and the adapter, and reducing the risk of issues such as scorching of the separator and incomplete welding.

In addition, on the basis that the region corresponding to the second protrusion has a sufficient connection thickness to meet connection strength requirements, the adapter can reduce its own thickness accordingly. Based on this, the additional space occupied by the adapter on the side of the reinforcing member away from the terminal body can be effectively reduced. In addition, since at least a portion of the second protrusion passes through the through hole, at least a portion of the second protrusion can share space with the reinforcing member along the thickness direction of the reinforcing member, effectively reducing the overall space occupied by the adapter and the electrode terminal within the housing, thereby facilitating an increase in the volumetric energy density of the battery cell.

In some embodiments, the adapter abuts against a side surface of the reinforcing member away from the terminal body.

With the above solution used, the adapter abuts against the side surface of the reinforcing member away from the terminal body, so that a clearance space between the adapter and the reinforcing member can be eliminated, thereby significantly reducing the overall space occupied by the adapter and the electrode terminal within the housing, and ensuring and increasing the volumetric energy density of the battery cell.

In some embodiments, the adapter is connected to a tab of the electrode assembly to form a connection mark; and
along the thickness direction of the reinforcing member, a projection of the reinforcing member at least partially overlaps with a projection of the connection mark.

With the above solution used, the projection of the reinforcing member along the thickness direction of the reinforcing member at least partially overlaps with the projection of the connection mark along the thickness direction of the reinforcing member, so that the reinforcing member can reliably reinforce a portion of the terminal body corresponding to the connection mark. Based on this, during use of the battery cell, particularly when the electrode assembly shakes and impacts the terminal body through the connection mark, the reinforcing effect of the reinforcing member on the portion of the terminal body corresponding to the connection mark effectively reduces the risk of damage to the terminal body due to impact, thereby ensuring and improving the reliability of the battery cell, and ensuring and extending the service life of the electrode terminal and the battery cell.

In some embodiments, the first wall is provided with a mounting hole running therethrough; and
the terminal body includes a main body portion, a first flange portion, and a second flange portion; the main body portion passes through the mounting hole; the first flange portion and the second flange portion are disposed at two opposite ends of the main body portion; and the first flange portion and the second flange portion cooperate to clamp the first wall.

With the above solution used, the terminal body can pass through the mounting hole through the main body portion, and the first flange portion and the second flange portion disposed on two opposite ends of the main body portion clamp the first wall cooperatively and jointly, achieving secure mounting of the terminal body in the mounting hole. Based on this, the mounting reliability between the terminal body and the mounting hole can be effectively improved, effectively restricting the terminal body from detaching from the mounting hole, thereby ensuring and improving the assembly reliability between the electrode terminal and the first wall, and ensuring and improving the structural reliability of the battery cell.

In some embodiments, the main body portion, the first flange portion, and the second flange portion are integrally formed.

With the above solution used, the main body portion, the first flange portion, and the second flange portion are integrally formed, so that the processing and formation of the terminal body can be facilitated, helping to improve the structural reliability of the terminal body, and improve the assembly convenience and assembly reliability between the terminal body and the mounting hole.

In some embodiments, an end of the main body portion away from the electrode assembly is provided with a groove.

With the above solution used, the end of the main body portion away from the electrode assembly is provided with the groove, so that an operational space is formed by the groove, facilitating a connection operation at a bottom of the groove from the outside of the main body portion, thereby facilitating the establishment of a convenient and reliable electrical connection between the bottom of the groove and the electrode assembly. In addition, the groove can reduce the material costs of the main body portion and the electrode terminal as well as the weights of the main body portion and the electrode terminal, thereby reducing the cost of the battery cell and increasing the weight energy density of the battery cell.

In some embodiments, structural strength of the reinforcing member is greater than structural strength of the terminal body.

With the above solution used, the structural strength of the reinforcing member is greater than the structural strength of the terminal body, so that the reinforcing effect of the reinforcing member on the terminal body can be ensured and improved, allowing the electrode terminal to achieve higher structural strength through the composite structure of the terminal body and the reinforcing member, thereby ensuring that the electrode terminal can meet the processing and assembly requirements, ensuring that the electrode terminal can withstand deformation-induced internal stress during use of the battery cell, reducing the risk of cracking of the electrode terminal due to stress concentration or inadequate structural strength, and ensuring and extending the service life of the electrode terminal and the battery cell.

In addition, this allows the electrode terminal to achieve higher structural strength with a smaller thickness, that is, facilitating the reduction of the thickness of the electrode terminal. Furthermore, as a ratio of the structural strength of the reinforcing member to the structural strength of the terminal body increases, the reinforcing member per unit thickness can provide a better reinforcing effect on the terminal body, allowing the terminal body to be further thinned, thereby enabling further reduction in the thickness of the electrode terminal. Based on this, the thickness of the electrode terminal can be effectively reduced, reducing the space occupied by the electrode terminal within the battery cell, thereby facilitating an increase in the volumetric energy density of the battery cell.

According to a second aspect, a battery is provided, where the battery includes the battery cell provided by the embodiments of this application.

With the above solution used, the battery can improve its volumetric energy density and space utilization by applying the battery cell provided by the embodiments of this application.

According to a third aspect, an electric apparatus is provided, where the electric apparatus includes the battery provided by the embodiments of this application or the battery cell provided by the embodiments of this application.

With the above solution used, the electric apparatus can ensure and improve its performance by applying the battery or battery cell provided by the embodiments of this application.

### BRIEF DESCRIPTION OF DRAWINGS

To clearly illustrate the technical solutions in the embodiments of this application, the drawings used in the description of the embodiments or the prior art are briefly introduced below. Apparently, the drawings described below are only some embodiments of this application, and persons skilled in the art can obtain other drawings based on these drawings without creative effort.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery cell according to some embodiments of this application;
FIG. 4 is a front view of the battery cell provided in FIG. 3;
FIG. 5 is a cross-sectional view along A-A of the battery cell provided in FIG. 4;
FIG. 6 is an enlarged view of region B of the battery cell provided in FIG. 5;
FIG. 7 is a cross-sectional view of an electrode terminal according to some embodiments of this application;
FIG. 8 is a schematic structural diagram of an adapter according to some embodiments of this application;
FIG. 9 is a cross-sectional view of the adapter provided in FIG. 8; and
FIG. 10 is a partial cross-sectional view of a battery cell according to some other embodiments of this application, where a portion of a terminal body exposed via a through hole is provided with a second protrusion, and the second protrusion passes through the through hole and is connected to an adapter.

Reference signs in the drawings are described as follows:
1. battery; 2. controller; 3. motor; 100. battery unit; 200. casing; 201. first portion; 202. second portion;
10. battery cell; 11. housing; 111. housing body; 112. end cap; 113. first wall; 1131. mounting hole; 12. electrode terminal; 12a. positive electrode terminal; 12b. negative electrode terminal; 121. terminal body; 1211. groove; 1212. electrolyte injection hole; 1213. main body portion; 1214. first flange portion; 1215. second flange portion; 1216. second protrusion; 122. reinforcing member; 1221. through hole; 13. adapter; 13a. positive electrode adapter; 13b. negative electrode adapter; 131. adapter body; 132. first protrusion; 133. connection mark; 14. insulating structure; 15. electrode assembly; 151. electrode body; 152. tab; 152a. positive electrode tab; and 152b. negative electrode tab.

### DESCRIPTION OF EMBODIMENTS

To describe the technical problems solved by this application, technical solutions, and beneficial effects of this application more clearly, the following further describes this application in detail with reference to the drawings and embodiments. It should be understood that the specific embodiments described herein are merely for explaining this application and are not intended to limit this application.

In the description of this application, it should be understood that the orientations or positional relationships indicated by the terms "length," "width," "upper," "lower," "front," "rear," "left," "right," "vertical," "horizontal," "top," "bottom," "inside," "outside," and the like indicate are based on the orientations or positional relationships shown in the drawings. These terms are merely for ease and brevity of the description of this application rather than indicating or implying that the means or components mentioned must have specific orientations, or must be constructed or manipulated according to specific orientations, and therefore shall not be construed as any limitations on embodiments of this application.

Furthermore, the terms "first" and "second" are merely intended for a purpose of description, and shall not be understood as an indication or implication of relative importance or an implicit indication of the number of the indicated technical features. Therefore, a feature limited by "first" or "second" may explicitly or implicitly include one or more features. In the description of this application, "at least two" means two or more, unless specifically defined otherwise.

In this application, unless otherwise expressly specified and defined, the terms such as "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection through an intermediate medium, an internal communication between two elements, or interaction between two elements. Persons skilled in the art can understand the specific meanings of the above terms in the context of this application based on specific circumstances.

A battery cell is the smallest unit for storing and outputting electrical energy. In some cases, a battery cell includes an end cap and an electrode terminal, where the electrode terminal is mounted on the end cap. The end cap is a component which cooperates with other components to form an internal environment of the battery cell. The formed internal environment of the battery cell is isolated from an external environment. The electrode terminal is stably mounted on the end cap and can be configured to output or input electrical energy.

Since the electrode terminal continuously withstands deformation-induced internal stress during use of the battery cell, the electrode terminal is typically required to have relatively high structural strength. Increasing the thickness of the electrode terminal can improve the structural strength of the electrode terminal, where the thickness of the electrode terminal refers to a dimension of the electrode terminal in a thickness direction of the electrode terminal. However, as the thickness of the electrode terminal increases, the volumetric energy density of the battery cell decreases. Based on this, to ensure the volumetric energy density of the battery cell, the thickness and structural strength of the electrode terminal need to be balanced, resulting in generally inadequate structural strength of electrode terminals in existing battery cells.

Thus, some embodiments of this application provide a battery cell, where the battery cell allows at least one electrode terminal to include a terminal body and a reinforcing member. Based on this, the electrode terminal may be electrically connected to an electrode assembly through the terminal body mounted on a first wall to output or input electrical energy. The electrode terminal may further reinforce the terminal body through a reinforcing member connected to an end of the terminal body in a thickness direction of the terminal body, thereby ensuring and improving the overall structural strength of both the terminal body and the reinforcing member. Based on this, the electrode terminal can achieve higher structural strength through a composite structure of the terminal body and the reinforcing member, ensuring that the electrode terminal can meet the processing and assembly requirements, and ensuring that the electrode terminal can withstand deformation-induced internal stress during use of the battery cell, thereby reducing the risk of cracking of the electrode terminal due to stress concentration or inadequate structural strength, and ensuring and extending the service life of the electrode terminal and the battery cell. Furthermore, based on the achieved higher structural strength, the composite structure of the terminal body and the reinforcing member can reduce the increase in the thickness of the electrode terminal, thereby reducing the negative impact on the volumetric energy density of the battery cell.

The battery cell disclosed in the embodiments of this application may be a lithium-ion secondary battery cell, a lithium-sulfur battery cell, a sodium-lithium-ion battery cell, a sodium-ion battery cell, a magnesium-ion battery cell, or the like. The battery cell may be in a cylinder shape, a flat shape, a cuboid shape, or other shapes. The battery cell may form a cylindrical battery cell, a prismatic battery cell, a pouch battery cell, or the like through different packaging methods.

The battery cell disclosed in the embodiments of this application may be used independently or in combination with other battery cells to form a modular battery providing higher voltage and capacity, such as a battery module, a battery assembly, or a battery pack.

The battery cell and battery disclosed in the embodiments of this application may be used in electric apparatuses that use a battery cell or battery as a power source, or in various energy storage systems that use a battery cell or battery as an energy storage component. The electric apparatus may include but is not limited to a vehicle, a mobile phone, a portable device, a notebook computer, a ship, a spacecraft, an electric toy, and an electric tool. The vehicle may be a fuel vehicle, a gas vehicle, or a new energy vehicle, where the new energy vehicle may be a battery electric vehicle, a hybrid vehicle, or an extended-range vehicle. The spacecraft includes an airplane, a rocket, a space shuttle, a spaceship, and the like. The electric toy includes a stationary or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

To illustrate the technical solutions provided by this application, a detailed description is provided below with reference to specific drawings and embodiments, taking "an electric apparatus being a vehicle" as an example.

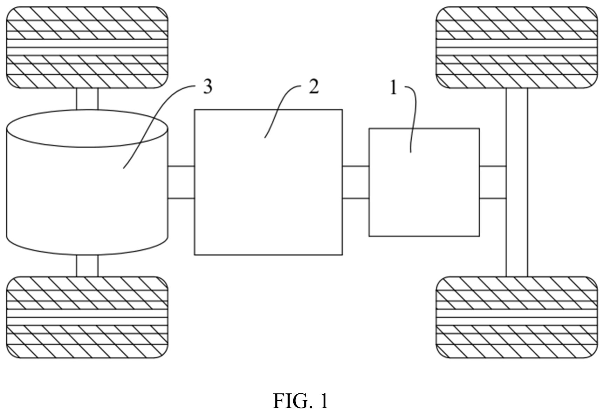

Referring to FIG. 1, FIG. 1 is a schematic structural diagram of a vehicle according to some embodiments of this application. The vehicle may be a fuel vehicle, a gas vehicle, or a new energy vehicle, where the new energy vehicle may be a battery electric vehicle, a hybrid vehicle, or an extended-range vehicle. A battery 1 is disposed inside the vehicle, and the battery 1 may be located at a bottom, front, or rear of the vehicle. The battery 1 is configured to supply power to the vehicle. For example, the battery 1 may be used as an operational power source of the vehicle. The vehicle may further include a controller 2 and a motor 3, where the controller 2 is configured to control the battery 1 to supply power to the motor 3, for example, to satisfy power needs of start, navigation, and driving of the vehicle.

In some embodiments of this application, the battery 1 may serve not only as the operational power source of the vehicle but also as the driving power source of the vehicle, replacing or partially replacing fuel or natural gas to provide traction power for the vehicle.

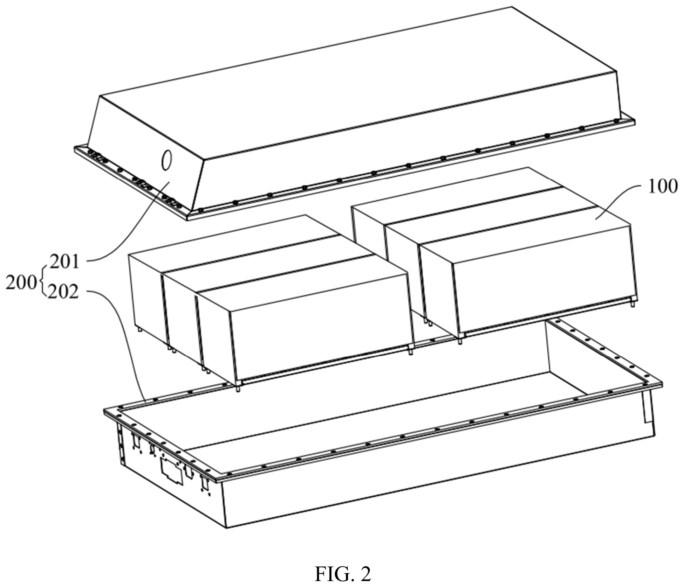

Referring to FIG. 2, FIG. 2 is an exploded schematic diagram of a battery 1 according to some embodiments of this application. The battery 1 includes a battery unit 100 and a casing 200, where the battery unit 100 is accommodated within the casing 200. The casing 200 is used to provide an accommodation space for the battery unit 100, and the casing 200 may adopt various structures. In some embodiments, the casing 200 may include a first portion 201 and a second portion 202, where the first portion 201 and the second portion 202 fit each other, such that the first portion 201 and the second portion 202 jointly define an accommodation space for accommodating the battery unit 100. The second portion 202 may be a hollow structure with an opening at an end, and the first portion 201 may be a plate-like structure, and the first portion 201 covers an opening side of the second portion 202, such that the first portion 201 and the second portion 202 jointly define the accommodation space. Alternatively, the first portion 201 and the second portion 202 may each be a hollow structure with an opening in a side, and the opening side of the first portion 201 is engaged with the opening side of the second portion 202. Certainly, the casing 200 formed by the first portion 201 and the second portion 202 may be in various shapes, such as a cylinder or a cuboid.

In the battery 1, at least two battery units 100 are provided. The at least two battery units 100 may be connected in series, parallel, or series-parallel, where being connected in series-parallel means a combination of series and parallel connections of the at least two battery units 100.

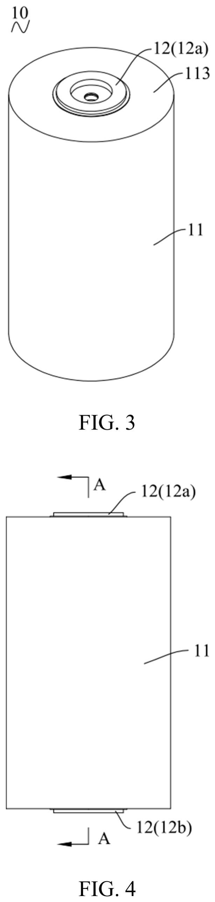

Specifically, the battery unit 100 may be a battery cell 10 (as shown in FIG. 3). At least two battery cells 10 may be directly connected in series, parallel, or series-parallel, and an entirety formed by the at least two battery cells 10 is accommodated within the casing 200. The battery cell 10 may be a lithium-ion secondary battery cell, a lithium-sulfur battery cell, a sodium-lithium-ion battery cell, a sodium-ion battery cell, a magnesium-ion battery cell, or the like. The battery cell 10 may be in a cylinder shape, a flat shape, a cuboid shape, or other shapes. The battery cell 10 may form a cylindrical battery cell, a prismatic battery cell, a pouch battery cell, or the like through different packaging methods.

Alternatively, the battery unit 100 may be a battery module or a battery assembly. At least two battery cells 10 may be connected in series, parallel, or series-parallel first to form a modular structure which is a battery module or a battery assembly; then at least two battery modules or battery assemblies are connected in series, parallel, or series-parallel to form an entirety which is accommodated in the casing 200.

Certainly, the battery 1 may further include other structures. For example, the battery 1 may further include a busbar (not shown in the figure) configured to implement an electrical connection between the at least two battery units 100.

Certainly, in some embodiments, the battery 1 may not include the casing 200; instead, at least two battery cells 10 may be electrically connected to form an entirety through necessary fixing structures, then the entirety is assembled in an electric apparatus.

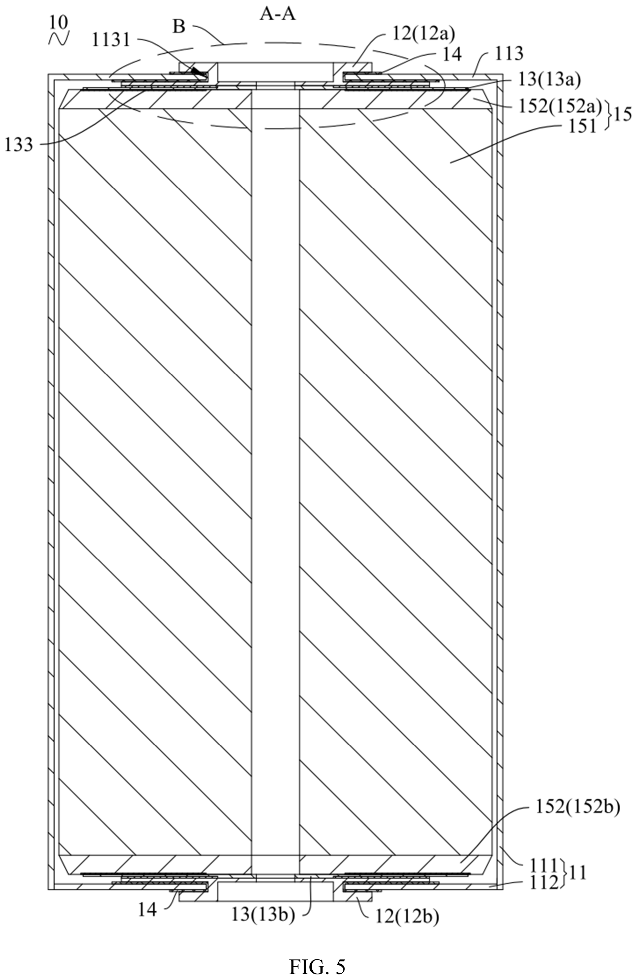

Referring to FIG. 3, FIG. 4, and FIG. 5, FIG. 3 is a schematic structural diagram of a battery cell 10 according to some embodiments of this application, FIG. 4 is a front view of the battery cell 10 provided in FIG. 3, and FIG. 5 is a cross-sectional view along A-A of the battery cell 10 provided in FIG. 4. The battery cell 10 is the smallest unit for storing and outputting electrical energy. The battery cell 10 includes a housing 11, an electrode terminal 12, an adapter 13, an electrode assembly 15, an electrolyte (not shown in the figure), and other components.

The housing 11 is a component that isolates an internal environment of the battery cell 10 from an external environment. The housing 11 may include a housing body 111 and an end cap 112. The end cap 112 is a component that covers an opening of the housing body 111 to isolate the internal environment of the battery cell 10 from the external environment. In some embodiments, the shape of the end cap 112 may be adapted to the shape of the housing body 111 to cooperate with the housing body 111. In some embodiments, the end cap 112 may be made of a material with a certain hardness and strength, so that the end cap 112 is less prone to deformation during compression or collision, allowing the battery cell 10 to have higher structural strength and improved safety performance. The end cap 112 may be made of various materials, and the end cap 112 may be made of materials such as copper, iron, aluminum, stainless steel, aluminum alloy, or plastic.

The housing body 111 is a component configured to cooperate with the end cap 112 to form the internal environment of the battery cell 10. The internal environment enclosed by the housing body 111 and the end cap 112 can accommodate components such as the electrode assembly 15 and the electrolyte. In some embodiments, the housing body 111 and the end cap 112 may be separate components, with an opening provided on the housing body 111, and the end cap 112 covering the opening to form the internal environment of the battery cell 10. In some embodiments, the end cap 112 and the housing body 111 may be integrated; specifically, the end cap 112 and the housing body 111 may form a common connection surface before other components are inserted into the housing, and when the inside of the housing body 111 needs to be sealed, the end cap 112 covers the housing body 111. The housing body 111 may take various shapes and sizes, such as a rectangular parallelepiped, cylinder, or hexagonal prism. The shape of the housing body 111 may be determined based on the specific shape and size of the electrode assembly 15. The material of the housing body 111 may vary, and the housing body 111 may be made of materials such as copper, iron, aluminum, stainless steel, aluminum alloy, or plastic.

The electrode assembly 15 is a component in the battery cell 10 where electrochemical reactions occur. The housing 11 may include one or at least two electrode assemblies 15 inside. The electrode assembly 15 includes a positive electrode plate (not shown in the figure), a negative electrode plate (not shown in the figure), and a separator (not shown in the figure), where the separator separates the positive electrode plate from the negative electrode plate. The positive electrode plate, the separator, and the negative electrode plate may be processed into the electrode assembly 15 through a winding method, a stacking method, or other methods. In the electrode assembly 15, portions of the positive electrode plate and the negative electrode plate containing active materials constitute an electrode body 151 of the electrode assembly 15, while portions of the positive electrode plate and the negative electrode plate without active materials each constitute a tab 152. The tab 152 serves as a current transmission terminal of the electrode assembly 15 for transmitting current. The tab 152 of the positive electrode plate is a positive electrode tab 152a, and the tab 152 of the negative electrode plate is a negative electrode tab 152b. The positive electrode tab 152a and the negative electrode tab 152b may be located together at an end of the electrode body 151 or at two ends of the electrode body 151 respectively.

The electrolyte is a liquid that infiltrates the electrode assembly 15. The battery cell 10 operates primarily by the movement of active ions between the positive electrode plate and the negative electrode plate. During charging of the battery cell 10, the positive electrode plate generates active ions. The active ions provided by the positive electrode plate can pass through pores of the separator, move through the electrolyte to the negative electrode plate, and are intercalated into a negative electrode active material of the negative electrode plate. Conversely, during discharging of the battery cell 10, active ions intercalated into the negative electrode active material of the negative electrode plate are deintercalated. The active ions deintercalated from the negative electrode plate can pass through the pores of the separator, move through the electrolyte to the positive electrode plate, and are intercalated into a positive electrode active material of the positive electrode plate. The active ions may be lithium ions, sodium ions, or the like.

The electrode terminal 12 is a component electrically connected to the electrode assembly 15 and configured to output or input electrical energy. The electrode terminal 12 includes a positive electrode terminal 12a and a negative electrode terminal 12b. The positive electrode terminal 12a is electrically connected to the positive electrode tab 152a of the electrode assembly 15. The negative electrode terminal 12b is electrically connected to the negative electrode tab 152b of the electrode assembly 15. The electrode terminal 12 may be mounted on the housing 11 and maintain a stable mounting position and mounting state relative to the housing 11. In some embodiments, the electrode terminal 12 may be mounted on the housing 11 through flanging and riveting. In some embodiments, an insulating structure 14 is provided at a region where the electrode terminal 12 cooperates with the housing 11, and the insulating structure 14 has insulation to mutually insulate the electrode terminal 12 and the housing 11, reducing the risk of short circuits. Optionally, the insulating structure 14 may include plastic, rubber, or the like.

The adapter 13 is a current-collecting component electrically connected between the tab 152 of the electrode assembly 15 and the corresponding electrode terminal 12. The adapter 13 may also be referred to as an adapting connector, a current-collecting plate, an adapter piece, or the like. The adapter 13 has conductive properties and is made of a conductive material. The material of the adapter 13 may include aluminum, aluminum alloy, copper, copper alloy, copper-aluminum alloy, and the like. The adapter 13 includes a positive electrode adapter 13a and a negative electrode adapter 13b. The positive electrode tab 152a of the electrode assembly 15 may be electrically connected to the positive electrode terminal 12a through the positive electrode adapter 13a, and the negative electrode tab 152b of the electrode assembly 15 may be electrically connected to the negative electrode terminal 12b through the negative electrode adapter 13b to form a current loop. In some embodiments, the adapter 13 may be connected to the tab 152 of the electrode assembly 15 through welding, abutting, or other methods. The adapter 13 may be connected to the electrode terminal 12 through welding, abutting, or other methods. The adapter 13 may be in various shapes such as a rectangular shape, a circular shape, or an irregular shape.

In some embodiments, the housing 11 may be further provided with a pressure relief mechanism (not shown in the figure) for releasing internal pressure when the internal pressure or temperature of the battery cell 10 reaches a threshold.

Referring to FIG. 3, FIG. 5, and FIG. 6, some embodiments of this application provide a battery cell 10 including a housing 11, an electrode assembly 15, and an electrode terminal 12. The housing 11 includes a first wall 113. The electrode assembly 15 is accommodated within the housing 11. The electrode terminal 12 includes a terminal body 121 and a reinforcing member 122. The terminal body 121 is disposed on the first wall 113 and electrically connected to the electrode assembly 15. The reinforcing member 122 is connected to an end of the terminal body 121 in a thickness direction of the terminal body 121.

It should be noted that the housing 11 is a component that isolates an internal environment of the battery cell 10 from an external environment. The first wall 113 is a wall portion of the housing 11 used for mounting the electrode terminal 12, and the first wall 113 may be a top wall, a bottom wall, or a side wall of the housing 11. In some embodiments, the housing 11 may include a housing body 111 and an end cap 112, and when the electrode terminal 12 is mounted on the end cap 112, the end cap 112 may serve as the first wall 113.

It should also be noted that the electrode assembly 15 is a component in the battery cell 10 where electrochemical reactions occur. The battery cell 10 may be provided with one or at least two electrode assemblies 15. The electrode assembly 15 may be accommodated within an internal space enclosed by the housing 11. The electrode assembly 15 includes a positive electrode plate, a negative electrode plate, and a separator, where the separator separates the positive electrode plate from the negative electrode plate. The positive electrode plate, the separator, and the negative electrode plate may be processed into the electrode assembly 15 through a winding method, a stacking method, or other methods. In the electrode assembly 15, portions of the positive electrode plate and the negative electrode plate containing active materials constitute an electrode body 151 of the electrode assembly 15, while portions of the positive electrode plate and the negative electrode plate without active materials each constitute a tab 152. The tab 152 serves as a current transmission terminal of the electrode assembly 15 for transmitting current. The tab 152 of the positive electrode plate is a positive electrode tab 152a, and the tab 152 of the negative electrode plate is a negative electrode tab 152b. The positive electrode tab 152a and the negative electrode tab 152b may be located together at an end of the electrode body 151 or at two ends of the electrode body 151 respectively.

It should further be noted that the electrode terminal 12 is electrically connected to the electrode assembly 15 and is a component configured to output or input electrical energy. The electrode terminal 12 includes a terminal body 121 and a reinforcing member 122.

The terminal body 121 is a component with current-carrying capacity and primarily serves to transmit electrical energy. The terminal body 121 is mounted on the first wall 113 and maintains a stable mounting position and mounting state relative to the first wall 113. In some embodiments, the terminal body 121 may be mounted on the first wall 113 through flanging and riveting. The terminal body 121 is electrically connected to the tab 152 of the electrode assembly 15. The terminal body 121 may be directly electrically connected to the tab 152 of the electrode assembly 15 or electrically connected to the tab 152 of the electrode assembly 15 through another component with current-carrying capacity. The "another component with current-carrying capacity" may be a reinforcing member 122 with current-carrying capacity or an adapter 13 that serves as a current-collecting component. Certainly, the reinforcing member 122 may not have current-carrying capacity. For example, in some embodiments, the reinforcing member 122 does not have current-carrying capacity, and the tab 152 of the electrode assembly 15 is electrically connected to the terminal body 121 through the adapter 13.

The reinforcing member 122 is a component configured to reinforce the terminal body 121 so as to improve the overall structural strength of both the terminal body 121 and the reinforcing member 122. The electrode terminal 12 provided with the reinforcing member 122 may be a positive electrode terminal 12a or a negative electrode terminal 12b. The material of the reinforcing member 122 may be selected based on the material of the terminal body 121, provided that the reinforcing member 122 can reinforce the terminal body 121. When the positive electrode terminal 12a and the negative electrode terminal 12b are each provided with the reinforcing member 122, the reinforcing member 122 of the positive electrode terminal 12a and the reinforcing member 122 of the negative electrode terminal 12b may be made of the same material or different materials tailored to their respective terminal bodies 121.

The reinforcing member 122 is connected to the end of the terminal body 121 in the thickness direction of the terminal body 121. That is, along the thickness direction of the terminal body 121, the reinforcing member 122 may be connected to an end of the terminal body 121 located inside the housing 11 or to an end of the terminal body 121 located outside the housing 11. When the reinforcing member 122 is connected to the end of the terminal body 121 located inside the housing 11, as the reinforcing member 122 is disposed inside the housing 11 and infiltrated by an electrolyte, the reinforcing member 122 needs to have resistance to electrolyte corrosion. A connection method of the reinforcing member 122 and the terminal body 121 may include but is not limited to welding or bonding. The thickness direction of the terminal body 121 is parallel to an axial direction of the terminal body 121, that is, an extension direction of a central axis of the terminal body 121.

In summary, the battery cell 10 provided by the embodiments of this application allows at least one electrode terminal 12 to include a terminal body 121 and a reinforcing member 122. Based on this, the electrode terminal 12 may be electrically connected to the electrode assembly 15 through the terminal body 121 mounted on the first wall 113 to output or input electrical energy. The electrode terminal 12 may be further connected to an end of the terminal body 121 in the thickness direction of the terminal body 121 through the reinforcing member 122, reinforcing the terminal body 121, thereby ensuring and improving the overall structural strength of both the terminal body 121 and the reinforcing member 122. Based on this, the electrode terminal 12 can achieve higher structural strength through a composite structure of the terminal body 121 and the reinforcing member 122, ensuring that the electrode terminal 12 can meet the processing and assembly requirements, and ensuring that the electrode terminal 12 can withstand deformation-induced internal stress during use of the battery cell 10, thereby reducing the risk of cracking of the electrode terminal 12 due to stress concentration or inadequate structural strength, and ensuring and extending the service life of the electrode terminal 12 and the battery cell 10. Furthermore, based on the achieved higher structural strength, the composite structure of the terminal body 121 and the reinforcing member 122 can reduce the increase in the thickness of the electrode terminal 12, thereby reducing the negative impact on the volumetric energy density of the battery cell 10. The thickness of the electrode terminal 12 refers to a dimension of the electrode terminal 12 along the thickness direction of the terminal body 121.

Referring to FIG. 5, FIG. 6, and FIG. 7, in some embodiments of this application, the reinforcing member 122 is connected to an end of the terminal body 121 close to the electrode assembly 15.

It should be noted that the reinforcing member 122 is connected to the end of the terminal body 121 close to the electrode assembly 15. That is, along the thickness direction of the terminal body 121, the reinforcing member 122 is connected to the end of the terminal body 121 located inside the housing 11. Based on this, the reinforcing member 122 can primarily reinforce a portion of the terminal body 121 located inside the housing 11.

In these embodiments, the reinforcing member 122 may have current-carrying capacity or may not have current-carrying capacity. When the reinforcing member 122 has current-carrying capacity, the electrode assembly 15 may be electrically connected to the terminal body 121 through the reinforcing member 122 or may be electrically connected to the terminal body 121 in a manner of bypassing the reinforcing member 122. When the reinforcing member 122 does not have current-carrying capacity, the electrode assembly 15 may be electrically connected to the terminal body 121 in a manner of bypassing the reinforcing member 122.

With the above solution used, the reinforcing member 122 is connected to the end of the terminal body 121 close to the electrode assembly 15, so that the reinforcing member 122 primarily reinforces a portion of the terminal body 121 located inside the housing 11. Based on this, the overall structural strength of the portion of the electrode terminal 12 inside the housing 11 can be ensured and improved, allowing the portion of the electrode terminal 12 inside the housing 11 to have higher overall structural strength. This allows the electrode terminal 12 to be processed to reliably cooperate with the first wall 113, establish a reliable electrical connection with the electrode assembly 15, withstand deformation-induced internal stress during use of the battery cell 10, and be not prone to cracking due to stress concentration or inadequate structural strength. In addition, based on this, the reduction of the increase in the thickness of the portion of the electrode terminal 12 inside the housing 11 is further facilitated, thereby limiting the space occupied by the electrode terminal 12 within the housing 11 and reducing the negative impact on the volumetric energy density of the battery cell 10.

Certainly, in other embodiments, the reinforcing member 122 may be connected to an end of the terminal body 121 away from the electrode assembly 15.

Referring to FIG. 5, FIG. 6, and FIG. 7, in some embodiments of this application, the reinforcing member 122 is connected to an end face of the terminal body 121 close to the electrode assembly 15.

It should be noted that the reinforcing member 122 is connected to the end of the terminal body 121 close to the electrode assembly 15 and is particularly connected to an end face of the end of the terminal body 121. Based on this, the reinforcing member 122 can provide large-area, more balanced, and more effective reinforcement to the portion of the terminal body 121 located inside the housing 11 from the end face of the terminal body 121 close to the electrode assembly 15.

With the above solution used, the reinforcing member 122 is connected to the end face of the terminal body 121 close to the electrode assembly 15, so that the connection convenience and connection reliability between the reinforcing member 122 and the terminal body 121 can be improved. In addition, this can ensure an arrangement area of the reinforcing member 122 on the end face of the terminal body 121 close to the electrode assembly 15, thereby ensuring that the reinforcing member 122 can provide large-area, more balanced, and more effective reinforcement to the portion of the terminal body 121 inside the housing 11. Therefore, this is conducive to ensuring and improving the overall structural strength of the portion of the electrode terminal 12 inside the housing 11, and uniformly reducing the increase in the thickness of the portion of the electrode terminal 12 inside the housing 11, thereby uniformly constraining the space occupied by the electrode terminal 12 within the housing 11, and reducing the negative impact on the volumetric energy density of the battery cell 10.

Certainly, in other embodiments, the reinforcing member 122 may be connected to other positions such as a peripheral surface of the end of the terminal body 121 close to the electrode assembly 15.

Referring to FIG. 5, FIG. 6, and FIG. 7, in some embodiments of this application, the reinforcing member 122 is provided with a through hole 1221; the through hole 1221 runs through the reinforcing member 122 along a thickness direction of the reinforcing member 122; and at least a portion of the terminal body 121 is exposed via the through hole 1221 and electrically connected to the electrode assembly 15.

It should be noted that the reinforcing member 122 may be provided with the through hole 1221, particularly when the reinforcing member 122 is connected to the end face of the terminal body 121 close to the electrode assembly 15. The through hole 1221 may run through the reinforcing member 122 along the thickness direction of the reinforcing member 122, that is, the through hole 1221 may run through two opposite end faces of the reinforcing member 122 along its thickness direction. The thickness direction of the reinforcing member 122 is parallel to a central axis of the reinforcing member 122. Based on this, at least a portion of the terminal body 121 may be exposed via the through hole 1221. In particular, a portion of the terminal body 121 corresponding to the through hole 1221 may be exposed via the through hole 1221 without being obstructed by the reinforcing member 122. This facilitates the electrical connection of the terminal body 121 to the electrode assembly 15 through the exposed portion. The through hole 1221 may be a circular hole, a rectangular hole, or the like. The through hole 1221 may be provided at any position on the reinforcing member 122 as needed. These embodiments are compatible with both cases where "the reinforcing member 122 has current-carrying capacity" and "the reinforcing member 122 does not have current-carrying capacity."

With the above solution used, the provision of the through hole 1221 in the reinforcing member 122 allows at least a portion of the terminal body 121 to be exposed via the through hole 1221 and electrically connected to the electrode assembly 15. Based on this, the establishment of an electrical connection between the terminal body 121 and the electrode assembly 15 in a manner of bypassing the reinforcing member 122 can be facilitated, thereby reducing the impact of the reinforcing member 122 on the current-carrying capacity between the terminal body 121 and the electrode assembly 15, and helping to ensure and improve the current-carrying capacity between the terminal body 121 and the electrode assembly 15.

Certainly, in other embodiments, even if it is not the case where the reinforcing member 122 is connected to the end face of the terminal body 121 close to the electrode assembly 15, the reinforcing member 122 may also be provided with the through hole 1221 as needed. Certainly, the reinforcing member 122 may be not provided with the through hole 1221.

Referring to FIG. 5, FIG. 6, and FIG. 7, in some embodiments of this application, the through hole 1221 is located at a middle portion of the reinforcing member 122. It should be noted that the through hole 1221 may be provided at the middle portion of the reinforcing member 122, but is not limited to being perfectly centered.

With the above solution used, when the reinforcing member 122 is connected to the end face of the terminal body 121 close to the electrode assembly 15, the provision of the through hole 1221 at the middle portion of the reinforcing member 122 allows a middle region of the end face of the terminal body 121 close to the electrode assembly 15 to be exposed via the through hole 1221 and electrically connected to the electrode assembly 15. Based on this, the establishment of an electrical connection between the middle region of the end face of the terminal body 121 and the electrode assembly 15 in a manner of bypassing the reinforcing member 122 can be facilitated, thereby ensuring and improving the connection convenience and connection reliability between the terminal body 121 and the electrode assembly 15, and optimizing a current path and current-carrying capacity between the terminal body 121 and the electrode assembly 15.

Referring to FIG. 5, FIG. 6, and FIG. 7, in some embodiments of this application, the first wall 113 is provided with a mounting hole 1131 running therethrough, and the terminal body 121 is mounted in the mounting hole 1131. Along the thickness direction of the reinforcing member 122, a projection of the through hole 1221 is located within a projection of the mounting hole 1131.

It should be noted that the first wall 113 is provided with the mounting hole 1131, and the mounting hole 1131 runs through the first wall 113 along a thickness direction of the first wall 113. The mounting hole 1131 is used for mounting the terminal body 121, that is, the terminal body 121 is mounted in the mounting hole 1131. The mounting hole 1131 may be a circular hole, a rectangular hole, or the like.

The reinforcing member 122 is provided with the through hole 1221. Along the thickness direction of the reinforcing member 122, the projection of the through hole 1221 is located within the projection of the mounting hole 1131. That is, along the thickness direction of the reinforcing member 122, the projection of the through hole 1221 on the end face of the terminal body 121 close to the electrode assembly 15 falls within an arrangement range of the mounting hole 1131. This means that an arrangement range of the through hole 1221 is not larger than the arrangement range of the mounting hole 1131.

With the above solution used, the projection of the through hole 1221 along the thickness direction of the reinforcing member 122 falling within the projection of the mounting hole 1131 along the thickness direction of the reinforcing member 122 allows the arrangement range of the through hole 1221 to be not larger than the arrangement range of the mounting hole 1131. Based on this, it can be ensured that the through hole 1221 is not provided in a region of the reinforcing member 122 corresponding to a joint between the terminal body 121 and the mounting hole 1131, allowing the reinforcing member 122 to reliably reinforce the region of the terminal body 121 at the joint with the mounting hole 1131, thereby ensuring and improving the overall structural strength of the electrode terminal 12 at the joint with the mounting hole 1131, reducing the risk of cracking in the region of the electrode terminal 12 at the joint with the mounting hole 1131 due to stress concentration or inadequate structural strength, and ensuring and extending the service life of the battery cell 10.

Referring to FIG. 5, FIG. 6, and FIG. 7, in some embodiments of this application, an end of the terminal body 121 away from the electrode assembly 15 is provided with a groove 1211.

It should be noted that the end of the terminal body 121 away from the electrode assembly 15, particularly the end face of the terminal body 121 away from the electrode assembly 15, is provided with the groove 1211. The groove 1211 is a groove-like structure, which may be but is not limited to a rectangular groove. A bottom of the groove 1211 may be retained as a portion of the terminal body 121 electrically connected to the electrode assembly 15. The groove 1211 may be used for providing an operational space to facilitate a related connection operation at the bottom of the groove 1211 from the outside of the terminal body 121.

With the above solution used, the end of the terminal body 121 away from the electrode assembly 15 is provided with the groove 1211, so that the operational space is formed by the groove 1211, facilitating the connection operation at the bottom of the groove 1211 from the outside of the terminal body 121, thereby facilitating the establishment of a convenient and reliable electrical connection between the bottom of the groove 1211 and the electrode assembly 15. In addition, the groove 1211 can reduce the material costs of the terminal body and the electrode terminal as well as the weights of the terminal body 121 and the electrode terminal 12, thereby reducing the cost of the battery cell 10 and increasing the weight energy density of the battery cell 10.

Referring to FIG. 5, FIG. 6, and FIG. 7, in some embodiments of this application, along the thickness direction of the reinforcing member 122, a projection of the groove 1211 is located within the projection of the through hole 1221.

It should be noted that the end of the terminal body 121 away from the electrode assembly 15 is provided with the groove 1211, and the reinforcing member 122 is provided with the through hole 1221. In this case, along the thickness direction of the reinforcing member 122, the projection of the groove 1211 is located within the projection of the through hole 1221. That is, along the thickness direction of the reinforcing member 122, the projection of the groove 1211 on the end face of the terminal body 121 close to the electrode assembly 15 falls within the projection of the through hole 1221 on the same end face. This means that the arrangement range of the through hole 1221 is not smaller than an arrangement range of the groove 1211.

With the above solution used, the projection of the groove 1211 along the thickness direction of the reinforcing member 122 falling within the projection of the through hole 1221 along the thickness direction of the reinforcing member 122 allows the arrangement range of the through hole 1221 to be not smaller than the arrangement range of the groove 1211. Based on this, it can be ensured that the through hole 1221 can avoid a bottom portion of the groove 1211 and can avoid a primary portion of the terminal body 121 electrically connected to the electrode assembly 15, thereby ensuring and improving the connection convenience between the terminal body 121 and the electrode assembly 15, particularly during welding to establish the electrical connection between the terminal body 121 and the electrode assembly 15, reducing the risk of portions of the reinforcing member 122 mixing into a weld seam and forming impurities, which otherwise affect welding quality and current-carrying capacity.

Referring to FIG. 5, FIG. 6, and FIG. 7, in some embodiments of this application, the bottom of the groove 1211 is provided with an electrolyte injection hole 1212 in communication with the inside of the housing 11.

It should be noted that the bottom of the groove 1211 is provided with the electrolyte injection hole 1212. The electrolyte injection hole 1212 is in communication with an internal space of the housing 11 from the bottom of the groove 1211, facilitating the injection of an electrolyte into the housing 11 from the outside of the housing 11 through the electrolyte injection hole 1212. During electrolyte injection, the groove 1211 can temporarily accommodate and guide the electrolyte (similar to a funnel), increasing an operational space for electrolyte injection and reducing the difficulty of electrolyte injection. After electrolyte injection is completed, the electrolyte injection hole 1212 needs to be sealed by components such as a sealing member. At this time, the groove 1211 provides an operational space for sealing the electrolyte injection hole 1212, increasing the operational space for sealing the electrolyte injection hole 1212 and reducing the difficulty of sealing the electrolyte injection hole 1212.

With the above solution used, the bottom of the groove 1211 is provided with the electrolyte injection hole 1212 in communication with the inside of the housing 11, so that the injection of the electrolyte into the housing 11 from the outside of the housing 11 through the electrolyte injection hole 1212 can be facilitated. In particular, during electrolyte injection, the groove 1211 can temporarily accommodate the electrolyte and guide the electrolyte to the electrolyte injection hole 1212, thereby reducing the difficulty of electrolyte injection and improving the convenience in electrolyte injection. In addition, during sealing of the electrolyte injection hole 1212 with components such as the sealing member after electrolyte injection, the groove 1211 provides the operational space for sealing the electrolyte injection hole 1212, thereby reducing the difficulty of sealing the electrolyte injection hole 1212 and improving the sealing convenience of the electrolyte injection hole 1212.

Referring to FIG. 5, FIG. 6, FIG. 7, and FIG. 8, in some embodiments of this application, the battery cell 10 includes an adapter 13. The adapter 13 is configured to electrically connect the electrode assembly 15 to the terminal body 121. The adapter 13 is connected to a portion of the terminal body 121 exposed via the through hole 1221.

It should be noted that the adapter 13 is a current-collecting component electrically connected between the electrode assembly 15 and the corresponding electrode terminal 12. The adapter 13 may be connected to the tab 152 of the electrode assembly 15 to achieve an electrical connection with the electrode assembly 15. The adapter 13 may be connected to the portion of the terminal body 121 exposed via the through hole 1221 to achieve an electrical connection with the electrode terminal 12.

With the above solution used, the adapter 13 can be electrically connected to the electrode assembly 15 and electrically connected to the portion of the terminal body 121 exposed via the through hole 1221, thereby establishing a stable and reliable electrical connection between the electrode assembly 15 and the terminal body 121. Based on this, the adapter 13 can provide current collection and current flow between the electrode assembly 15 and the terminal body 121. In addition, since the adapter 13 is directly connected to the portion of the terminal body 121 exposed via the through hole 1221 in a manner of bypassing the reinforcing member 122, the impact of the reinforcing member 122 on the current-carrying capacity between the terminal body 121 and the adapter 13 can be effectively reduced, thereby helping to ensure and improve the current-carrying capacity between the terminal body 121 and the electrode assembly 15.

Referring to FIG. 5, FIG. 6, FIG. 8, and FIG. 9, in some embodiments of this application, the adapter 13 includes an adapter body 131 and a first protrusion 132 disposed on the adapter body 131. The first protrusion 132 passes through the through hole 1221 and is connected to the terminal body 121.

It should be noted that the adapter body 131 is a portion of the adapter 13 configured to be electrically connected to the electrode assembly 15. The adapter body 131 may be disposed on a side of the reinforcing member 122 away from the terminal body 121. The first protrusion 132 is a protruding structure disposed on a side of the adapter body 131 close to the electrode terminal 12 and protruding toward the terminal body 121. The first protrusion 132 may pass through the through hole 1221 of the reinforcing member 122 and be electrically connected to the portion of the terminal body 121 exposed via the through hole 1221.

With the above solution used, the adapter 13 can be conveniently and reliably electrically connected to the tab 152 of the electrode assembly 15 through the adapter body 131, ensuring and improving the connection convenience, connection reliability, and current-carrying capacity between the adapter 13 and the electrode assembly 15. The adapter 13 can also pass through the through hole 1221 with precise alignment through the first protrusion 132 disposed on the adapter body 131 so as to be reliably electrically connected to the portion of the terminal body 121 exposed via the through hole 1221 in a manner of bypassing the reinforcing member 122, thereby ensuring and improving the connection convenience, connection reliability, and current-carrying capacity between the adapter 13 and the terminal body 121.

Furthermore, the adapter 13 can combine thicknesses of the first protrusion 132 and a portion of the adapter body 131 corresponding to the first protrusion 132, ensuring that the adapter 13 has a sufficient thickness for connection with the terminal body 121, thereby ensuring a reliable and effective connection between the adapter 13 and the terminal body 121, ensuring and increasing an effective weld penetration depth between the adapter 13 and the terminal body 121, and reducing the risk of issues such as scorching of a separator and incomplete welding.

In addition, on the basis that the overall thickness of the first protrusion 132 and the portion of the adapter body 131 corresponding to the first protrusion 132 can meet the above requirements, the adapter 13 can reduce the thickness of the adapter body 131 accordingly, and at least a portion of the first protrusion 132 passes through the through hole 1221, thereby allowing at least a portion of the first protrusion 132 to share space with the reinforcing member 122 along the thickness direction of the reinforcing member 122. Based on this, an additional space occupied by the adapter 13 on a side of the reinforcing member 122 away from the terminal body 121 can be effectively reduced, effectively reducing the overall space occupied by the adapter 13 and the electrode terminal 12 within the housing 11, thereby facilitating an increase in the volumetric energy density of the battery cell 10.

The thickness of the first protrusion 132 is a dimension of the first protrusion 132 along the thickness direction of the adapter 13. The thickness of the adapter body 131 is a dimension of the adapter body 131 along the thickness direction of the adapter 13. The thickness direction of the adapter 13 is parallel to a central axis of the adapter 13.

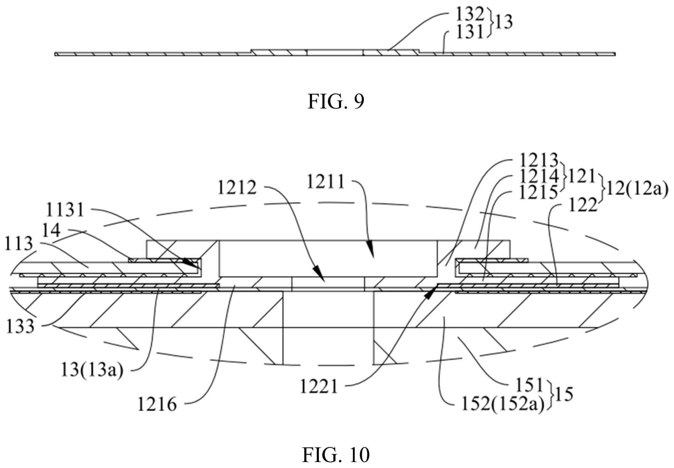

Referring to FIG. 10, in some embodiments of this application, the portion of the terminal body 121 exposed via the through hole 1221 is provided with a second protrusion 1216. The second protrusion 1216 passes through the through hole 1221 and is connected to the adapter 13.

It should be noted that the second protrusion 1216 is a protruding structure disposed on the portion of the terminal body 121 exposed via the through hole 1221 and protruding toward the adapter 13. The second protrusion 1216 may pass through the through hole 1221 of the reinforcing member 122 and be electrically connected to a portion of the adapter 13 corresponding to the through hole 1221.

With the above solution used, the terminal body 121 can pass through the through hole 1221 with precise alignment through the second protrusion 1216 so as to be reliably electrically connected to the portion of the adapter 13 corresponding to the through hole 1221 in a manner of bypassing the reinforcing member 122, thereby ensuring and improving the connection convenience, connection reliability, and current-carrying capacity between the terminal body 121 and the adapter 13.

In addition, the provision of the second protrusion 1216 can ensure a sufficient connection thickness between the terminal body 121 and the adapter 13 in a region corresponding to the second protrusion 1216, thereby ensuring a reliable and effective connection between the terminal body 121 and the adapter 13, ensuring and increasing the effective weld penetration between the terminal body 121 and the adapter 13, and reducing the risk of issues such as scorching of the separator and incomplete welding.

In addition, on the basis that the region corresponding to the second protrusion 1216 has a sufficient connection thickness to meet connection strength requirements, the adapter 13 can reduce its own thickness accordingly. Based on this, the additional space occupied by the adapter 13 on the side of the reinforcing member 122 away from the terminal body 121 can be effectively reduced. In addition, since at least a portion of the second protrusion 1216 passes through the through hole 1221, at least a portion of the second protrusion 1216 can share space with the reinforcing member 122 along the thickness direction of the reinforcing member 122, effectively reducing the overall space occupied by the adapter 13 and the electrode terminal 12 within the housing 11, thereby facilitating an increase in the volumetric energy density of the battery cell 10.

The thickness of the second protrusion 1216 is a dimension of the second protrusion 1216 along the thickness direction of the terminal body 121.

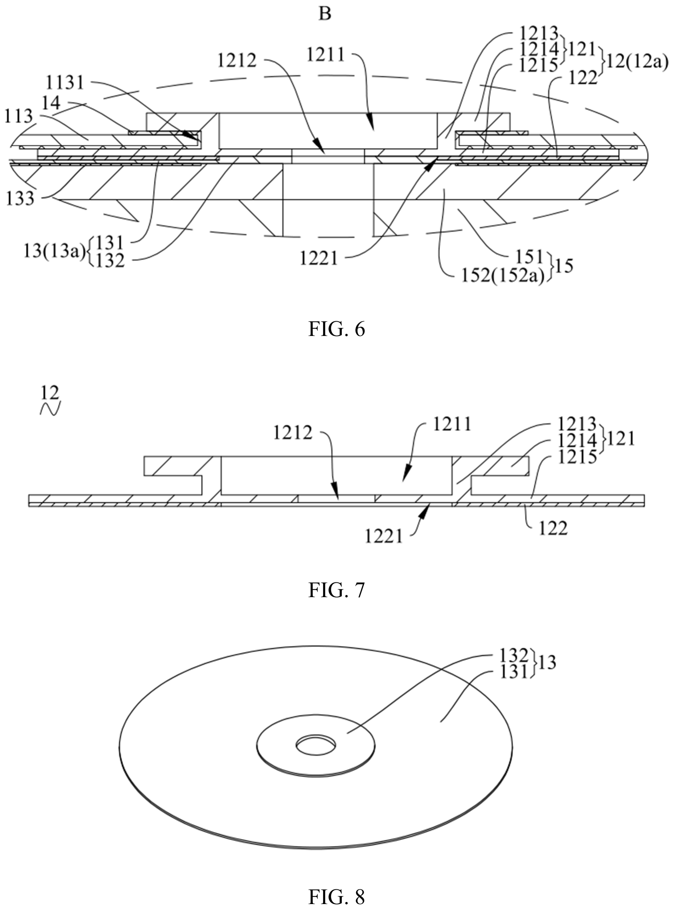

Referring to FIG. 6 and FIG. 10, in some embodiments of this application, the adapter 13 abuts against a side surface of the reinforcing member 122 away from the terminal body 121.

It should be noted that, as shown in FIG. 6, when the adapter 13 includes the adapter body 131 and the first protrusion 132, and the first protrusion 132 passes through the through hole 1221 and is connected to the terminal body 121, the thickness of the first protrusion 132 may be less than or equal to the thickness of the reinforcing member 122, allowing the entirety of the first protrusion 132 to share space with the reinforcing member 122 along the thickness direction of the reinforcing member 122, thereby allowing the adapter body 131 of the adapter 13 to abut against the side surface of the reinforcing member 122 away from the terminal body 121. In particular, when the thickness of the first protrusion 132 is equal to the thickness of the reinforcing member 122, if the overall thickness of the first protrusion 132 and the portion of the adapter body 131 corresponding to the first protrusion 132 is a determined value, the thickness of the adapter body 131 may be equal to the overall thickness minus the thickness of the reinforcing member 122, that is, the thickness of the adapter body 131 can be precisely reduced based on the difference between the overall thickness and the thickness of the reinforcing member 122.

As shown in FIG. 10, when the portion of the terminal body 121 exposed via the through hole 1221 is provided with the second protrusion 1216, and the second protrusion 1216 passes through the through hole 1221 and is connected to the adapter 13, the thickness of the second protrusion 1216 may be less than or equal to the thickness of the reinforcing member 122, allowing the entirety of the second protrusion 1216 to share space with the reinforcing member 122 along the thickness direction of the reinforcing member 122, thereby allowing the adapter 13 to abut against the side surface of the reinforcing member 122 away from the terminal body 121.

The thickness of the reinforcing member 122 is a dimension of the reinforcing member 122 along the thickness direction of the reinforcing member 122.

With the above solution used, the adapter 13 abuts against the side surface of the reinforcing member 122 away from the terminal body 121, so that a clearance space between the adapter 13 and the reinforcing member 122 can be eliminated, thereby significantly reducing the overall space occupied by the adapter 13 and the electrode terminal 12 within the housing 11, and ensuring and increasing the volumetric energy density of the battery cell 10.

Certainly, in other embodiments, the thickness of the first protrusion 132 may be greater than the thickness of the reinforcing member 122, so that a portion of the first protrusion 132 passes through the through hole 1221 while another portion of the first protrusion 132 is exposed outside the through hole 1221. Alternatively, the thickness of the second protrusion 1216 may be greater than the thickness of the reinforcing member 122, so that a portion of the second protrusion 1216 passes through the through hole 1221 while another portion of the second protrusion 1216 is exposed outside the through hole 1221.

Referring to FIG. 5 and FIG. 6, in some embodiments of this application, the adapter 13 is connected to the tab 152 of the electrode assembly 15 to form a connection mark 133. Along the thickness direction of the reinforcing member 122, a projection of the reinforcing member 122 at least partially overlaps with a projection of the connection mark 133.

It should be noted that the adapter 13 may be connected to the tab 152 of the electrode assembly 15 through a manner including but not limited to welding. After connection, the connection mark 133 is formed at the joint between the adapter 13 and the tab 152. When the adapter 13 is welded to the tab 152, the connection mark 133 is a weld mark.

Along the thickness direction of the reinforcing member 122, the projection of the reinforcing member 122 at least partially overlaps with the projection of the connection mark 133. That is, along the thickness direction of the reinforcing member 122, the projection of the reinforcing member 122 on the side surface of the adapter 13 close to the electrode assembly 15 overlaps with the connection mark 133.

With the above solution used, the projection of the reinforcing member 122 along the thickness direction of the reinforcing member 122 at least partially overlaps with the projection of the connection mark 133 along the thickness direction of the reinforcing member 122, so that the reinforcing member 122 can reliably reinforce a portion of the terminal body 121 corresponding to the connection mark 133. Based on this, during use of the battery cell 10, particularly when the electrode assembly 15 shakes and impacts the terminal body 121 through the connection mark 133, the reinforcing effect of the reinforcing member 122 on the portion of the terminal body 121 corresponding to the connection mark 133 effectively reduces the risk of damage to the terminal body 121 due to impact, thereby ensuring and improving the reliability of the battery cell 10, and ensuring and extending the service life of the electrode terminal 12 and the battery cell 10.

Referring to FIG. 5, FIG. 6, and FIG. 7, in some embodiments of this application, the first wall 113 is provided with a mounting hole 1131 running therethrough. The terminal body 121 includes a main body portion 1213, a first flange portion 1214, and a second flange portion 1215. The main body portion 1213 passes through the mounting hole 1131. The first flange portion 1214 and the second flange portion 1215 are disposed at two opposite ends of the main body portion 1213. The first flange portion 1214 and the second flange portion 1215 cooperate to clamp the first wall 113.

It should be noted that the first wall 113 is provided with the mounting hole 1131, and the mounting hole 1131 runs through the first wall 113 along the thickness direction of the first wall 113. The mounting hole 1131 is used for mounting the terminal body 121, that is, the terminal body 121 is mounted in the mounting hole 1131. The mounting hole 1131 may be a circular hole, a rectangular hole, or the like.

It should also be noted that the terminal body 121 includes the main body portion 1213, the first flange portion 1214, and the second flange portion 1215. The main body portion 1213 is a portion of the terminal body 121 that passes through the mounting hole 1131. The main body portion 1213 passes through the mounting hole 1131, and the mounting hole 1131 can circumferentially limit the main body portion 1213.

The first flange portion 1214 is connected to an end of the main body portion 1213 and protrudes from a peripheral surface of the main body portion 1213. The first flange portion 1214 may stop and limit at one side opening of the mounting hole 1131 and abut against one side surface of the first wall 113 along the thickness direction of the first wall 113. Correspondingly, the second flange portion 1215 is connected to the other end of the main body portion 1213 and protrudes from the peripheral surface of the main body portion 1213. The second flange portion 1215 may stop and limit at the other side opening of the mounting hole 1131 and abuts against the other side surface of the second wall along a thickness direction of the second wall. The first flange portion 1214 and the second flange portion 1215 may clamp the first wall 113 between them cooperatively and jointly, restricting the terminal body 121 from detaching from the mounting hole 1131, that is, restricting the electrode terminal 12 from detaching from the first wall 113.

With the above solution used, the terminal body 121 can pass through the mounting hole 1131 through the main body portion 1213 and clamp the first wall 113 cooperatively and jointly through the first flange portion 1214 and the second flange portion 1215 disposed at two opposite ends of the main body portion 1213, achieving secure mounting of the terminal body 121 in the mounting hole 1131. Based on this, the mounting reliability between the terminal body 121 and the mounting hole 1131 can be effectively improved, effectively restricting the terminal body 121 from detaching from the mounting hole 1131, thereby ensuring and improving the assembly reliability between the electrode terminal 12 and the first wall 113, and ensuring and improving the structural reliability of the battery cell 10.

Certainly, in other embodiments, the terminal body 121 may use other structural forms.

Referring to FIG. 5, FIG. 6, and FIG. 7, in some embodiments of this application, the main body portion 1213, the first flange portion 1214, and the second flange portion 1215 are integrally formed.

It should be noted that the main body portion 1213, the first flange portion 1214, and the second flange portion 1215 are integrally formed. That is, the main body portion 1213, the first flange portion 1214, and the second flange portion 1215 form an integrated structure. In some embodiments, the terminal body 121 may be mounted in the mounting hole 1131 through flanging and riveting, and the main body portion 1213, the first flange portion 1214, and the second flange portion 1215 are formed on the terminal body 121.

With the above solution used, the main body portion 1213, the first flange portion 1214, and the second flange portion 1215 are integrally formed, so that the processing and formation of the terminal body 121 can be facilitated, helping to improve the structural reliability of the terminal body 121 and improve the assembly convenience and assembly reliability between the terminal body 121 and the mounting hole 1131.

Referring to FIG. 5, FIG. 6, and FIG. 7, in some embodiments of this application, an end of the main body portion 1213 away from the electrode assembly 15 is provided with a groove 1211.

It should be noted that the end of the main body portion 1213 away from the electrode assembly 15, particularly an end face of the main body portion 1213 away from the electrode assembly 15, is provided with the groove 1211. The groove 1211 is a groove-like structure, which may be but is not limited to a rectangular groove. A bottom of the groove 1211 may be retained as a portion of the main body portion 1213 electrically connected to the electrode assembly 15. The groove 1211 may be used for providing an operational space to facilitate a connection operation at the bottom of the groove 1211 from the outside of the main body portion 1213.

With the above solution used, the end of the main body portion 1213 away from the electrode assembly 15 is provided with the groove 1211, so that the operational space is formed by the groove 1211, facilitating the connection operation at the bottom of the groove 1211 from the outside of the main body portion 1213, thereby facilitating the establishment of a convenient and reliable electrical connection between the bottom of the groove 1211 and the electrode assembly 15. In addition, the groove 1211 can reduce the material costs of the main body portion 1213 and the electrode terminal 12 as well as the weights of the main body portion 1213 and the electrode terminal 12, thereby reducing the cost of the battery cell 10 and increasing the weight energy density of the battery cell 10.

In some embodiments, insulating structures 14 are disposed between the main body portion 1213 and the first wall 113, between the first flange portion 1214 and the first wall 113, and between the second flange portion 1215 and the first wall 113, allowing the terminal body 121 and the first wall 113 to be insulated from each other.

Referring to FIG. 5, FIG. 6, and FIG. 7, in some embodiments of this application, structural strength of the reinforcing member 122 is greater than structural strength of the terminal body 121.

It should be noted that the structural strength of the reinforcing member 122 is greater than the structural strength of the terminal body 121. That is, the structural strength of the material of the reinforcing member 122 is greater than the structural strength of the material of the terminal body 121.

In some embodiments, the electrode terminal 12 provided with the reinforcing member 122 may be a positive electrode terminal 12a. The positive electrode terminal 12a is configured to be electrically connected to the positive electrode tab 152a of the electrode assembly 15. The material of the terminal body 121 of the positive electrode terminal 12a may include aluminum, aluminum alloy, and the like. Based on the material of the terminal body 121 of the positive electrode terminal 12a, the reinforcing member 122 may be made of a material with greater structural strength.

In some embodiments, the electrode terminal 12 provided with the reinforcing member 122 may be a negative electrode terminal 12b. The negative electrode terminal 12b is configured to be electrically connected to the negative electrode tab 152b of the electrode assembly 15. The material of the terminal body 121 of the negative electrode terminal 12b may include copper, copper alloy, and the like. Based on the material of the terminal body 121 of the negative electrode terminal 12b, the reinforcing member 122 may be made of a material with greater structural strength.

When both the positive electrode terminal 12a and the negative electrode terminal 12b are each provided with the reinforcing member 122, the reinforcing member 122 of the positive electrode terminal 12a and the reinforcing member 122 of the negative electrode terminal 12b may be made of the same material or different materials tailored to their respective terminal bodies 121.

With the above solution used, the structural strength of the reinforcing member 122 is greater than the structural strength of the terminal body 121, so that the reinforcing effect of the reinforcing member 122 on the terminal body 121 can be ensured and improved, allowing the electrode terminal 12 to achieve higher structural strength through the composite structure of the terminal body 121 and the reinforcing member 122, thereby ensuring that the electrode terminal 12 can meet the processing and assembly requirements, ensuring that the electrode terminal 12 can withstand deformation-induced internal stress during use of the battery cell 10, reducing the risk of cracking of the electrode terminal 12 due to stress concentration or inadequate structural strength, and ensuring and extending the service life of the electrode terminal 12 and the battery cell 10.

In addition, this allows the electrode terminal 12 to achieve higher structural strength with a smaller thickness, that is, facilitating the reduction of the thickness of the electrode terminal. Furthermore, as a ratio of the structural strength of the reinforcing member 122 to the structural strength of the terminal body 121 increases, the reinforcing member 122 per unit thickness can provide a better reinforcing effect on the terminal body 121, allowing the terminal body 121 to be further thinned, thereby enabling further reduction in the thickness of the electrode terminal 12. Based on this, the thickness of the electrode terminal 12 can be effectively reduced, reducing the space occupied by the electrode terminal 12 within the battery cell 10, thereby facilitating an increase in the volumetric energy density of the battery cell 10.

Referring to FIG. 5, FIG. 6, and FIG. 7, in some embodiments of this application, the reinforcing member 122 includes at least one of steel, titanium, and tungsten.

With the above solution used, the reinforcing member 122 includes at least one of steel, titanium, and tungsten, so that the reinforcing member 122 has better structural strength and can provide effective and reliable reinforcement to the terminal body 121, thereby facilitating the reduction of the thickness of the electrode terminal 12 and increasing the volumetric energy density of the battery cell 10.

Certainly, in other embodiments, the reinforcing member 122 may be made of other materials.

Referring to FIG. 3 to FIG. 9, based on some of the above embodiments, the embodiments of this application provide a specific example of a battery cell 10.

The battery cell 10 includes a housing 11, an electrode terminal 12, an adapter 13, and an electrode assembly 15. The housing 11 includes a first wall 113, where the first wall 113 is provided with a mounting hole 1131 running therethrough. The electrode terminal 12 includes a terminal body 121 and a reinforcing member 122. The terminal body 121 includes a main body portion 1213, a first flange portion 1214, and a second flange portion 1215. The main body portion 1213 passes through the mounting hole 1131. The first flange portion 1214 and the second flange portion 1215 are disposed at two opposite ends of the main body portion 1213. The first flange portion 1214 is located on an outer side of the first wall 113. The second flange portion 1215 is located on an inner side of the first wall 113. The first flange portion 1214 and the second flange portion 1215 cooperate to clamp the first wall 113. The first flange portion 1214 is provided with a groove 1211. A bottom of the groove 1211 is provided with an electrolyte injection hole 1212 in communication with the inside of the housing 11. The terminal body 121 may be mounted in the mounting hole 1131 through flanging and riveting; and the main body portion 1213, the first flange portion 1214, and the second flange portion 1215 are formed.

The reinforcing member 122 is connected to an end face of the second flange portion 1215 facing away from the first flange portion 1214. Structural strength of the reinforcing member 122 is greater than structural strength of the terminal body 121, and both the reinforcing member 122 and the terminal body 121 are resistant to electrolyte corrosion. A middle portion of the reinforcing member 122 is provided with a through hole 1221. The through hole 1221 runs through the reinforcing member 122 along a thickness direction of the reinforcing member 122. Along the thickness direction of the reinforcing member 122, a projection of the through hole 1221 is located within a projection of the mounting hole 1131, and a projection of the groove 1211 is located within the projection of the through hole 1221. A middle region of the end face of the second flange portion 1215 is exposed via the through hole 1221.

The adapter 13 includes an adapter body 131 and a first protrusion 132. The adapter body 131 is disposed on a side of the reinforcing member 122 facing away from the terminal body 121. The first protrusion 132 is disposed on a side of the adapter body 131 facing the terminal body 121. The first protrusion 132 passes through the through hole 1221 of the reinforcing member 122 and is electrically connected to an end face region of the second flange portion 1215 exposed via the through hole 1221. The thickness of the first protrusion 132 is equal to the thickness of the reinforcing member 122. The adapter body 131 abuts against a side surface of the reinforcing member 122 away from the terminal body 121.

The electrode assembly 15 is located on a side of the adapter 13 facing away from the electrode terminal 12. A tab 152 of the electrode assembly 15 is connected to the adapter body 131 to form a connection mark 133. Along the thickness direction of the reinforcing member 122, a projection of the reinforcing member 122 at least partially overlaps with a projection of the connection mark 133.

Based on the above configuration, the reinforcing member 122 can reinforce the terminal body 121 and particularly reinforce the second flange portion 1215, ensuring and improving the overall structural strength of the reinforcing member 122 and the second flange portion 1215, and ensuring and improving the overall structural strength of the reinforcing member 122 and the terminal body 121. Thus, under a reinforcing effect of the reinforcing member 122, the electrode terminal 12, particularly the reinforcing member 122 and the second flange portion 1215, may have better overall structural strength, and can be subjected to processing procedures such as flanging and riveting, establish a reliable electrical connection with the electrode assembly 15, withstand deformation-induced internal stress during use of the battery cell 10, and be not prone to cracking due to stress concentration or inadequate structural strength.

In addition, on the basis that the overall structural strength of the electrode terminal 12 can meet the above requirements, the thickness of the electrode terminal 12 can be reduced, particularly the thickness of the second flange portion 1215, and the total thickness of the reinforcing member 122 and the second flange portion 1215 can be reduced. That is, through a composite structure of the terminal body 121 and the reinforcing member 122, the electrode terminal 12 can achieve higher structural strength with a smaller thickness. Furthermore, as a ratio of the structural strength of the reinforcing member 122 to the structural strength of the terminal body 121 increases, the reinforcing member 122 per unit thickness can provide a better reinforcing effect on the terminal body 121, allowing the terminal body 121, particularly the second flange portion 1215, to be further thinned, thereby enabling further reduction in the thickness of the electrode terminal 12. This can reduce the thickness of the electrode terminal 12, thereby reducing the space occupied by the electrode terminal 12 within the housing 11, and increasing the volumetric energy density of the battery cell 10.

In a specific application example, the terminal body 121 is made of aluminum, and the reinforcing member 122 is made of steel. Based on a ratio of structural strength of steel to structural strength of aluminum, steel with a thickness of 0.1 mm (millimeters) can replace aluminum with a thickness of 0.3 mm to 0.4 mm. Based on this, in this example, a 0.4 mm thick aluminum second flange portion 1215 is combined with a 0.2 mm thick steel reinforcing member 122 to ensure that the thickness of the second flange portion 1215 can meet electrical connection requirements and ensure that the overall structural strength of the reinforcing member 122 and the second flange portion 1215 can meet the above requirements. Thus, compared to an electrode terminal 12 not provided with a reinforcing member 122, where the second flange portion 1215 is required to at least have a thickness of 1.0 mm to ensure strength, a portion of the electrode terminal 12 inside the housing 11 in this example can be reduced by at least 0.4 mm in thickness.

Based on the above arrangement, the tab 152 of the electrode assembly 15 can be electrically connected to the adapter body 131 of the adapter 13. The first protrusion 132 of the adapter 13 can pass through the through hole 1221 so as to be electrically connected to the second flange portion 1215 of the terminal body 121 in a manner of bypassing the reinforcing member 122, ensuring that the electrode assembly 15 can form a reliable electrical connection with the terminal body 121 through the adapter 13, reducing the impact of the reinforcing member 122 on the current flow between the electrode assembly 15, the adapter 13, and the terminal body 121, and ensuring and improving the current-carrying capacity between the electrode assembly 15, the adapter 13, and the terminal body 121, thereby ensuring the performance of the battery cell 10.

Based on the above arrangement, at the first protrusion 132 and a portion of the adapter body 131 corresponding to the first protrusion 132, the overall thickness of the first protrusion 132 and the adapter body 131 can ensure a sufficient connection thickness for the adapter 13, ensuring a reliable and effective connection between the adapter 13 and the terminal body 121, also ensuring a reliable and effective connection between the adapter 13 and the electrode assembly 15, increasing an effective weld penetration depth, and reducing the risk of issues such as scorching of a separator and incomplete welding.

In addition, on the basis that the overall thickness of the first protrusion 132 and the portion of the adapter body 131 corresponding to the first protrusion 132 can meet the above requirements, the thickness of the adapter body 131 can be reduced accordingly, and the first protrusion 132 can pass through the through hole 1221, allowing the first protrusion 132 to share space with the reinforcing member 122 along the thickness direction of the reinforcing member 122, effectively reducing an additional space occupied by the adapter 13 on a side of the reinforcing member 122 away from the terminal body 121, and effectively reducing the overall space occupied by the adapter 13 and the electrode terminal 12 within the housing 11, thereby increasing the volumetric energy density of the battery cell 10.

In a specific application example, a 0.2 mm thick steel reinforcing member 122 is used. Correspondingly, the thickness of the first protrusion 132 of the adapter 13 is set to 0.2 mm. At the first protrusion 132 and the portion of the adapter body 131 corresponding to the first protrusion 132, the overall thickness of the first protrusion 132 and the adapter body 131 is set to 0.4 mm to ensure connection. Therefore, the thickness of the adapter body 131 is equal to the overall thickness minus the thickness of the first protrusion 132, which is 0.2 mm. Thus, when the first protrusion 132 passes through the through hole 1221, only the adapter body 131 of the adapter 13 occupies the additional space on the side of the reinforcing member 122 away from the terminal body 121. Compared to an adapter 13 not provided with a first protrusion 132 and required to be at least 0.4 mm thick to ensure connection, the portion of the adapter 13 on the side of the reinforcing member 122 away from the terminal body 121 in this example can be reduced by at least 0.2 mm in thickness.

Referring to FIG. 2 and FIG. 3, some embodiments of this application provide a battery 1, where the battery 1 includes the battery cell 10 provided by the embodiments of this application.

With the above solution used, the battery 1 can increase its volumetric energy density and space utilization of the battery 1 by applying the battery cell 10 provided by the embodiments of this application.

Referring to FIG. 1 and FIG. 3, some embodiments of this application provide an electric apparatus, where the electric apparatus includes the battery 1 provided by the embodiments of this application or the battery cell 10 provided by the embodiments of this application.

With the above solution used, the electric apparatus can ensure and improve its performance by applying the battery 1 or battery cell 10 provided by the embodiments of this application.

The foregoing descriptions are merely preferred embodiments of this application and are not intended to limit this application. Any modifications, equivalent substitutions, or improvements made within the spirit and principle of this application shall fall within the protection scope of this application.

## Claims

1. A battery cell, comprising:
a housing comprising a first wall;
an electrode assembly accommodated within the housing; and
an electrode terminal comprising a terminal body and a reinforcing member, wherein the terminal body is disposed on the first wall and electrically connected to the electrode assembly, and the reinforcing member is connected to an end of the terminal body in a thickness direction of the terminal body.

2. The battery cell according to claim 1, wherein the reinforcing member is connected to an end of the terminal body close to the electrode assembly.

3. The battery cell according to claim 2, wherein the reinforcing member is connected to an end face of the terminal body close to the electrode assembly.

4. The battery cell according to claim 3, wherein the reinforcing member is provided with a through hole; the through hole runs through the reinforcing member along a thickness direction of the reinforcing member; and at least a portion of the terminal body is exposed via the through hole and electrically connected to the electrode assembly.

5. The battery cell according to claim 4, wherein the through hole is located at a middle portion of the reinforcing member.

6. The battery cell according to claim 4 or 5, wherein the first wall is provided with a mounting hole running therethrough, and the terminal body is mounted in the mounting hole; and
along the thickness direction of the reinforcing member, a projection of the through hole is located within a projection of the mounting hole.

7. The battery cell according to any one of claims 4 to 6, wherein an end of the terminal body away from the electrode assembly is provided with a groove; and
along the thickness direction of the reinforcing member, a projection of the groove is located within the projection of the through hole.

8. The battery cell according to any one of claims 4 to 7, wherein the battery cell comprises an adapter; the adapter is configured to electrically connect the electrode assembly to the terminal body; and the adapter is connected to a portion of the terminal body exposed via the through hole.

9. The battery cell according to claim 8, wherein the adapter comprises an adapter body and a first protrusion disposed on the adapter body, and the first protrusion passes through the through hole and is connected to the terminal body; or
the portion of the terminal body exposed via the through hole is provided with a second protrusion, and the second protrusion passes through the through hole and is connected to the adapter.

10. The battery cell according to claim 9, wherein the adapter abuts against a side surface of the reinforcing member away from the terminal body.

11. The battery cell according to any one of claims 8 to 10, wherein the adapter is connected to a tab of the electrode assembly to form a connection mark; and
along the thickness direction of the reinforcing member, a projection of the reinforcing member at least partially overlaps with a projection of the connection mark.

12. The battery cell according to any one of claims 1 to 11, wherein the first wall is provided with a mounting hole running therethrough; and
the terminal body comprises a main body portion, a first flange portion, and a second flange portion; the main body portion passes through the mounting hole; the first flange portion and the second flange portion are disposed at two opposite ends of the main body portion; and the first flange portion and the second flange portion cooperate to clamp the first wall.

13. The battery cell according to claim 12, wherein the main body portion, the first flange portion, and the second flange portion are integrally formed.

14. The battery cell according to claim 12 or 13, wherein an end of the main body portion away from the electrode assembly is provided with a groove.

15. The battery cell according to any one of claims 1 to 14, wherein structural strength of the reinforcing member is greater than structural strength of the terminal body.

16. A battery, wherein the battery comprises the battery cell according to any one of claims 1 to 15.

17. An electric apparatus, wherein the electric apparatus comprises the battery according to claim 16 or the battery cell according to any one of claims 1 to 15.
